(19) Europäisches Patentamt
European Patent Office
Office européen des brevets

(11) **EP 4 273 300 A2**

(12) **EUROPEAN PATENT APPLICATION**


(43) Date of publication:
**08.11.2023 Bulletin 2023/45**

(21) Application number: **23163217.5**

(22) Date of filing: **21.03.2023**

(51) International Patent Classification (IPC):
***C25B 1/04*** *(2021.01)* ***B01J 23/75*** *(2006.01)*
***C25B 9/19*** *(2021.01)* ***C25B 11/077*** *(2021.01)*

(52) Cooperative Patent Classification (CPC):
**C25B 11/077; B01J 23/75; C25B 1/04; C25B 9/19**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.05.2022 KR 20220055257**



(71) Applicant: **SK Innovation Co., Ltd.**
**Seoul 03188 (KR)**

(72) Inventors:
- **HAN, Hyun Su**
  **34124 Daejeon (KR)**
- **KIM, Hee Soo**
  **34124 Daejeon (KR)**
- **SEOK, Tae Hong**
  **34124 Daejeon (KR)**
- **LEE, Seung Ok**
  **34124 Daejeon (KR)**
- **IM, Ju Hwan**
  **34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**


(54) **POROUS AMORPHOUS METAL OXIDE-BASED CATALYSTS FOR OXYGEN EVOLUTION REACTION AND WATER SPLITTING SYSTEM USING THE SAME**


(57) Disclosed are an electrochemical catalyst capable of lowering the overpotential of the oxygen evolution reaction (OER) during a water splitting reaction in spite of using inexpensive metals (specifically, base metals) instead of conventional noble metal catalysts in the complex watersplitting reactions that require high overpotential, and a water splitting system using the same.


**Fig. 1**

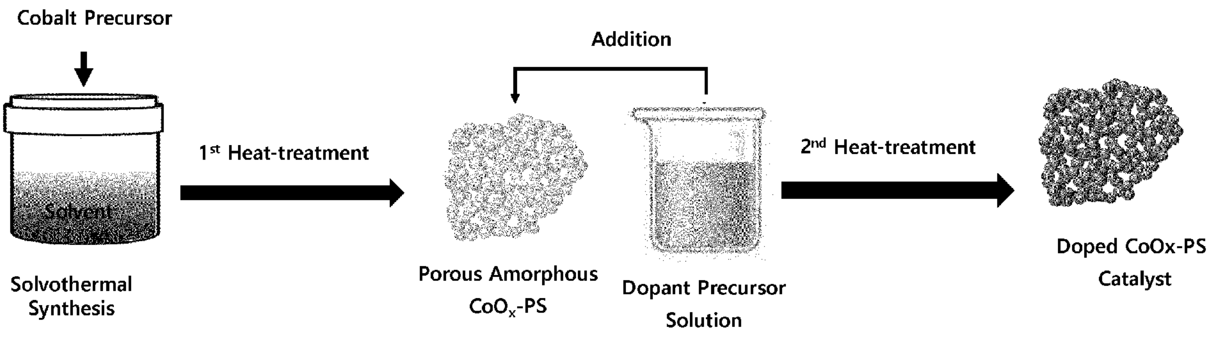


EP 4 273 300 A2

## Description

BACKGROUND OF THE INVENTION

Field of the Invention

The present disclosure relates to porous amorphous metal oxide-based catalysts for oxygen evolution reaction. More particularly, the present disclosure relates to an electrochemical catalyst capable of lowering the overpotential of the oxygen evolution reaction (OER) during a water splitting reaction in spite of using inexpensive metals (specifically, base metals) instead of conventional noble metal catalysts in the complex water-splitting reactions that require high overpotential, and a water splitting system using the same.

Description of the Related Art

Water splitting (also known as "water electrolysis"), i.e., the splitting or dissociation of water into oxygen gas and hydrogen gas, is important to the energy storage as well as the production of oxygen gas and/or hydrogen gas. In particular, as interest in alternative energy has recently increased due to environmental pollution and depletion of fossil fuels, hydrogen energy through water splitting is attracting a great deal of attention as an alternative energy that is rich in raw materials, has no problems with environmental pollution and is efficient.

Water splitting refers to a process in which a compound that is not naturally dissociated an anion and a cation in an aqueous solution is dissociated into an anion and a cation by application of an electric current. In this regard, a device for water splitting basically includes an external power source, an anode, and a cathode. The external power source provides the electricity required for water splitting, while each of the cathode and the anode serves to transfer electricity to the compound and to provide the sites to which the anion or cation is adhered. Since hydrogen evolution reaction and oxygen evolution reaction in water splitting act as rate-determining steps due to the low reaction rate, an electrochemical catalyst is required to increase the oxygen evolution rate or the oxygen reduction rate.

Specifically, energy is consumed for splitting water into hydrogen gas and oxygen gas, while energy is released when hydrogen gas binds again to oxygen gas to form water molecules. Therefore, the overall reaction mechanism of the water splitting process is depicted by the following Reaction Scheme 1.

[Reaction Scheme 1]

Anode (oxidation) : $H_2O \rightarrow 2H^+ + 2e^- + 1/2O_2$

Cathode (reduction): $2H^+ + 2e^- \rightarrow H_2$

Overall reaction: $H_2O \rightarrow H_2 + 1/2O_2$

In particular, the half-cell reaction and overall reaction in an acidic medium and an alkaline medium, respectively, may be depicted by the following Reaction Schemes 2 and 3.

[Reaction Scheme 2]

Anode (oxidation) : $2H_2O(1) \rightarrow O_2(g) + 4H^+ + 4e^-$

Cathode (reduction) : $4H^+ + 4e^- \rightarrow 2H_2$

Overall reaction: $H_2O(l) \rightarrow H_2(g) + 1/2O_2(g)$

[Reaction Scheme 3]

Anode (oxidation) : $4OH^- \rightarrow O_2(g) + 2H_2O + 4e^-$

Cathode (reduction) : $4H_2O + 4e^- \rightarrow 2H_2(g) + 4OH^-$

Overall reaction: $H_2O(l) \rightarrow H_2(g) + 1/2O_2(g)$

Oxygen and hydrogen gases are produced in a molar ratio of 1:2 through the water splitting reaction described above and the produced gas can be used as a non-polluting energy source or fuel.

In order for water splitting to be commercially competitive, catalysts are required to satisfy the following requirements: (i) high hydrogen or oxygen conversion efficiency, (ii) excellent durability, (iii) low driving voltage, and (iv) price competitiveness. In particular, it is preferable that electrochemically driven water splitting catalysts produce hydrogen or oxygen at low voltages, regardless of pH.

On the other hand, water splitting has a drawback of low reaction rate and thus research is ongoing on the applicability of various types of electrochemical catalysts. In this regard, noble metal-based catalysts for water splitting are widely known. In particular, platinum-based catalysts are typically used in the hydrogen evolution reaction, while iridium oxide ($IrO_3$) or ruthenium oxide ($RuO_3$) catalysts are widely used in the oxygen evolution reaction.

Conventional electrochemical electrodes for water splitting exhibited catalytic activity above a certain level in the hydrogen evolution reaction (HER), but are limited to achieving excellent oxygen evolution reaction activity when acting as oxygen evolution electrodes (anodes). Specifically, the oxygen evolution reaction in the two half-reactions in the water splitting system is recognized as a technical barrier due to low reaction rate and the necessity of high overpotential. In particular, iridium oxide, which is mainly used as a catalyst for oxygen evolution reaction at the anode (oxidation electrode), has recently been pointed out as a factor that makes commercialization more difficult due to the high price thereof compared to other noble metals (e.g., platinum or ruthenium).

In addition, an example of an electrochemical electrode for water splitting that uses, as a substrate for the anode, a structure having a plate, foil, or foam made of a metal (e.g., copper or nickel) and is decorated with a base-metal catalytic ingredient such as manganese dioxide, tungsten, or iron chalcogenide has also been reported. However, this electrochemical electrode has a problem of being unsuitable for commercialization due to high catalyst production cost compared to performance. Moreover, when an inexpensive base-metal catalyst is used instead of a noble metal-based catalyst, corrosion may occur under an acidic environment or a high driving voltage is required. Therefore, there is still a need for improvement in performance compared to the noble metal-based catalysts.

Under this technical background, there is a need for a method capable of providing excellent water splitting reaction activity, particularly, oxygen evolution reaction activity, although an inexpensive metal is used instead of an expensive noble metal.

## SUMMARY OF THE INVENTION

An embodiment according to the present disclosure provides an inexpensive base-metal catalyst capable of exhibiting performance comparable to a noble metal such as an iridium oxide-based catalyst, which is mainly used as a catalyst for oxygen evolution reaction, and an electrochemical electrode using the same.

An embodiment according to the present disclosure provides a water splitting system in which the base metal catalyst is applied to an anode.

In accordance with an embodiment of the present disclosure, a catalyst for an oxygen evolution reaction electrode for water splitting comprises:

porous amorphous cobalt oxide; and
0.5 to 3 at% of at least one P-block element as a dopant, based upon the catalyst.

In accordance with an embodiment of the present disclosure, a method of preparing a catalyst for an oxygen evolution reaction electrode for water splitting comprises:

a) converting a cobalt precursor into cobalt hydroxide by solvothermal synthesis,
b) heat-treating the solvothermal synthesis product in an oxygen-containing atmosphere at a first heat treatment temperature to form porous amorphous cobalt oxide, and
c) adding a precursor of at least one P-block element to the porous amorphous cobalt oxide, followed by performing heat treatment under an inert atmosphere at a second heat treatment temperature,

wherein the porous amorphous cobalt oxide is doped with the at least one P-block element in an amount of 0.5 to 3 at%, based upon the catalyst.

In an embodiment, a solvent for the solvothermal synthesis may be a mixed solvent containing polyglycol and polyol.

In an embodiment, a volume ratio of the polyglycol to the polyol in the solvent may be adjusted within the range of 10:1 to 50:1.

In an embodiment, the polyglycol may be at least one selected from the group consisting of triethylene glycol, diethylene glycol, dipropylene glycol and tetraethylene glycol.

In an embodiment, the polyol may be at least one selected from the group consisting of glycerol, trimethylolpropane, glycerol propoxylate, glycerol ethoxylate and glycerol trihexanoate.

In an embodiment, a concentration of the cobalt precursor in the solvent in operation a) may be adjusted within a range of 50 to 200 mM.

In an embodiment, operation a) may be performed at a temperature controlled within a range of 150 to 250 °C.

In an embodiment, the first heat treatment temperature and the second heat treatment temperature may be each controlled in a range of 300 to 500 °C.

In an embodiment, the precursor of at least one P-block element in operation c) may be added in the form of a solution, and a concentration thereof may be determined within a range of 10 to 150 mM.

In an embodiment, the at least one P-block element may be lead (Pb).

In an embodiment, the cobalt oxide may have a specific surface area (BET) of 40 to 90 $m^2/g$.

In an embodiment, the catalyst may have a specific surface area (BET) of 35 to 85 $m^2/g$.

In an embodiment, the porous amorphous cobalt oxide in the catalyst may be represented by CoOx, wherein x is 1 to 4.

In an embodiment, the inert atmosphere may be formed by at least one gas selected from the group consisting of argon, nitrogen and helium.

In accordance with an embodiment of the present disclosure, an oxygen evolution reaction electrode for water splitting comprises:

an electrode substrate; and
a porous amorphous metal oxide-based catalyst loaded on the electrode substrate,
wherein the porous amorphous metal oxide-based catalyst comprises:

porous amorphous cobalt oxide, and
0.5 to 3 at% of at least one P-block element as a dopant, based upon the catalyst.

In an embodiment, the electrode may have an overpotential of 0.4 V (vs. RHE) or less at a reference current density of 10 $mA/cm^2$, and at a scan rate of 10 $mVs^{-1}$ in the presence of a 0.1 M KOH solution (pH 13).

In an embodiment, an amount of the catalyst loaded in the electrode may be within a range of 0.02 to 0.2 $mg/cm^2$.

In accordance with an embodiment of the present disclosure, a water splitting system comprises:

an anode and a cathode as electrochemical electrodes electrically connected to an external power source, and
an aqueous medium containing an electrolyte, wherein, upon application of a voltage from the external power source, oxygen is generated at the anode and hydrogen is generated at the cathode,
wherein the anode comprises a porous amorphous cobalt oxide-based catalyst loaded on an electrode substrate, and the porous amorphous cobalt oxide-based catalyst comprises:

(i) porous amorphous cobalt oxide, and
(ii) 0.5 to 3 at% of at least one P-block element as a dopant, based upon the catalyst.

BRIEF DESCRIPTION OF THE DRAWINGS

The above and other objects, features, and other features of the present disclosure will be more clearly understood from the following detailed description taken in conjunction with the accompanying drawings, in which:

FIG. 1 is a schematic diagram illustrating a series of operations for preparing a porous amorphous cobalt oxide-based catalyst according to an embodiment;
FIGS. 2A and 2B showing the results of scanning electron microscope (SEM) and energy dispersive X-ray spectroscopy (EDX)-mapping analysis of a lead-doped CoOx porous sheet (Pb-CoOx-PS) catalyst and a non-porous CoOx (CoOx) catalyst, respectively;
FIG. 3 is a X-ray diffraction (XRD) pattern of each of the lead-doped CoOx porous sheet catalyst (Pb-CoOx-PS), the CoOx porous sheet (CoOx-PS) catalyst and the non-porous (CoOx) catalyst;

FIG. 4 is a graph illustrating the results of adsorption experiments for analysis of the specific surface area (BET) of the lead-doped CoOx porous sheet (Pb-CoOx-PS) catalyst, the CoOx porous sheet (CoOx-PS) catalyst, and the non-porous CoOx (CoOx) catalyst;

FIG. 5 shows the results of X-ray photoelectron spectroscopy (XPS) of the lead-doped CoOx porous sheet (Pb-CoOx-PS) catalyst, the CoOx porous sheet (CoOx-PS) catalyst and the non-porous CoOx (CoOx) catalyst;

FIG. 6 shows a current density vs. voltage curve of each of a commercial iridium oxide ($IrO_2$) catalyst, a lead-doped CoOx porous sheet (Pb-CoOx-PS) catalyst, a CoOx porous sheet (CoOx-PS) catalyst, and a non-porous CoOx (CoOx) catalyst; and

FIG. 7 shows an applied voltage vs. log current density curve of each of the commercial iridium oxide ($IrO_2$) catalyst, the lead-doped CoOx porous sheet (Pb-CoOx-PS) catalyst, the CoOx porous sheet (CoOx-PS) catalyst, and the non-porous CoOx (CoOx) catalyst.

## DETAILED DESCRIPTION OF THE INVENTION

The present disclosure can all be achieved by the following description. The following description should be understood as describing embodiments of the present disclosure and should not be construed as limiting the scope of the present disclosure. In addition, the accompanying drawings are provided for better understanding of the present disclosure and should not be construed as limiting the scope of the present disclosure. Details of individual configurations may be appropriately understood from the specific intention of the related description given later.

As used herein, the term "catalyst" refers to a component that increases the rate of an electrochemical decomposition reaction and participates in the electrochemical reaction while not being consumed by the reaction. In a narrow sense, the catalyst may refer to a component that facilitates a reaction mechanism that supplies or accepts electrons in the hydrogen evolution reaction and/or oxygen evolution reaction by water splitting.

As used herein, the term "solvothermal synthesis" refers to a chemical reaction that occurs in a solvent at a temperature higher than the boiling point of the solvent in a sealed container, and may be referred to as "hydrothermal synthesis" when the solvent is water.

As used herein, the term "water splitting" may refer to a reaction in which water is dissociated or decomposed into oxygen gas and hydrogen gas using electric energy supplied from an external power source.

As used herein, the term "electrode" refers to a conductive structure that is electrically connected to an external power source in the water splitting system, is typically a conductive structure isolated from the external power source in appearance and refers to a cathode at which reduction occurs or an anode at which oxidation occurs, when a voltage, upon applying a voltage from an external power source.

As used herein, the term "catalyst electrode" refers to a current collector on which a catalyst is loaded, whereby catalyst is absorbed thereon or is electrically connected thereto in a discrete or separate manner. In the context of the disclosure, the catalyst electrode may be understood as associated with the current collector through a change in oxidation state and/or dynamic equilibrium with an aqueous medium when the catalyst is exposed to the aqueous medium (e.g., an aqueous electrolyte solution).

As used herein, the term "electrochemical electrode" refers to an electrode structure in which a catalyst component facilitating water splitting is mixed with or attached to a substrate for an electrode (cathode and/or anode).

As used herein, the term "overpotential" refers to an additional potential in excess of the thermodynamic requirement for reduction or oxidation to obtain the desired catalytic activity. Here, overpotential may mean the difference between the voltage to be applied to the electrode in order to induce water splitting and the thermodynamic voltage required for the water splitting.

Throughout the description, the terms "on", "over", "under" and "below" are used to refer to the relative positioning between elements or members, and the expressions "disposed on..." and "disposed under..." are used to refer to the relative positioning between elements (or members) wherein the elements (or members) may or may not contact one another.

When a numerical range is specified herein with a lower limit and/or an upper limit, it will be understood that any sub-combination within the numerical range is also disclosed. For example, the expression "1 to 5" may include 1, 2, 3, 4, and 5, and any sub-combination therebetween.

Throughout the description, when any element or member is described as "connected" to another component or member, unless stated otherwise, one element or member may be directly disposed on another element or member, or one element or member may be indirectly disposed on another element or member, with a further element or member interposed therebetween.

In a similar way, when any element or member is described as "contacting" another component or member, unless stated otherwise, one element or member may directly contact another element or member, or one element or member may indirectly contact another element or member, with a further element or member interposed therebetween.

Unless stated otherwise, the term "comprise" will be understood to imply the inclusion of stated elements and/or

operations, but not the exclusion of any other elements.

**Catalyst and method of preparing the same**

A series of operations for preparing a porous amorphous cobalt oxide-based catalyst according to an embodiment is schematically shown in FIG. 1.

Referring to FIG. 1, in order to prepare a catalyst applicable to an electrochemical electrode of a water splitting system, specifically, an electrode for oxygen evolution reaction (anode), a cobalt precursor is first subject to solvothermal synthesis, followed by heat treatment to prepare porous amorphous cobalt oxide.

Referring to FIG. 1, a cobalt precursor (cobalt source) is prepared. The cobalt precursor may be used in the form of a salt. In an embodiment, a salt may have an oxidation number of $2^+$. The cobalt precursor may be, for example, at least one selected from halide (specifically, chloride), sulfate, nitrate, phosphate, carbonate, acetate, and the like, and may also be a hydrate of the compound described above. In an embodiment, the cobalt precursor may be nitrate (or a hydrate thereof) which reacts during solvothermal synthesis because it exhibits good solubility in an alcohol-based solvent such as polyols and/or polyglycols.

According to the illustrated embodiment, the cobalt precursor is added to a solvent. In an embodiment, a solvent may be an organic solvent. For example, the organic solvent may include an alcohol-based solvent to prepare a cobalt precursor solution as a reactant for solvothermal synthesis.

According to an embodiment, the solvent useful for solvothermal synthesis may be selected from solvents capable of suppressing aggregation or agglomeration of synthesized cobalt oxide. The solvent may include at least one selected from polyglycol, polyol, and the like. In an embodiment, the solvent may include a mixed solvent of polyglycol and polyol. The solvent may have a relatively high boiling point, for example, at least about 200 °C. In an embodiment, the boiling point may be in the range of about 230 to 350 °C. In an embodiment, the boiling point may be in the range of about 250 to 320 °C. In an embodiment, the boiling point may be in the range of about 270 to 300 °C. In this way, the aggregation in the solvothermal synthesis of cobalt hydroxide can be effectively suppressed by using a solvent having a high boiling point, specifically, a combination of solvents.

According to an embodiment, polyglycol may refer to dihydroxy ether formed by dehydration of two or more glycol molecules as represented by the following general formula 1.

[General Formula 1]

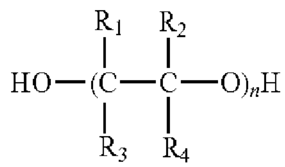

wherein each of $R_1$ to $R_4$ is hydrogen or a C1-C6 alkyl group.

In this embodiment, polyglycol can act as a surfactant and can further provide reducing power, thereby help producing nanostructures of cobalt hydroxide, which is a product of solvothermal synthesis. In an embodiment, the polyglycol may, for example, include at least one selected from triethylene glycol, diethylene glycol, dipropylene glycol, tetraethylene glycol, and the like. In an embodiment, the polyglycol may be triethylene glycol (TEG) exhibiting high solubility for the cobalt precursor and good reducing power even at a relatively low temperature.

On the other hand, polyol may mean an alcohol containing at least three hydroxyl groups. In an embodiment, the polyol may include an alcohol containing three hydroxyl groups. The polyol can serve as a strong surfactant and control the nanostructure of cobalt hydroxide, a product of solvothermal synthesis. In an embodiment, the polyol may, for example, include at least one selected from glycerol, trimethylolpropane, glycerol propoxylate, glycerol ethoxylate, glycerol trihexanoate, and the like. For example, the polyol may control the nanostructure even when used in a small amount.

According to an embodiment, the volume ratio of polyglycol to polyol in the mixed solvent may be controlled within the range of, for example, about 10:1 to 50:1. In an embodiment, the volume ratio of polyglycol to polyol in the mixed solvent may be controlled within the range of about 15:1 to 40:1. In an embodiment, the volume ratio of polyglycol to polyol in the mixed solvent may be controlled within the range of about 20:1 to 30:1. In this regard, when the relative amount of polyglycol is too high or too low, products may agglomerate or the yield may decrease. Therefore, it is advantageous to adjust the polyglycol within the above-mentioned range. However, the range may vary depending on the type of polyglycol and/or polyol and the present embodiment is not limited thereto.

According to an embodiment, the concentration of the cobalt precursor in the solution may be determined in

consideration of the degree of particle formation, for example about 50 to 200 mM, specifically about 70 to 150 mM, and more specifically about 90 to 120 mM.

According to the embodiment, the cobalt precursor in the precursor solution may be converted into cobalt hydroxide by solvothermal synthesis. In this regard, polyglycol has a hydroxyl group and acts as a weak reducing agent and surfactant. In an embodiment, the polyglycol may be triethylene glycol. During the reaction, non-uniform nucleation occurs and fine particles generated at the beginning of the reaction continuously grow and aggregate, leading to an increase in particle size. In this case, polyol (or in an embodiment, glycerol) may act as an auxiliary surfactant to control the particle size.

According to an embodiment, the reaction temperature during solvothermal synthesis may be, for example, about 150 to 250 °C. In an embodiment, the reaction temperature during solvothermal synthesis may be about 160 to 220 °C. In an embodiment, the reaction temperature during solvothermal synthesis may be about 170 to 200 °C. In addition, the reaction pressure is not particularly limited, but is typically adjustable within the range of at least about 10 $kg/cm^2$. In an embodiment, it may be about 15 to 20 $kg/cm^2$. In addition, the reaction time may be adjusted in the range of, for example, at least about 1 hour. In an embodiment, it may be about 2 to 5 hours. In an embodiment it may be about 3 to 4 hours. The above ranges are mere examples, and may vary depending on an embodiment. When solvothermal synthesis is finished, the product is washed, for example, at least one time, using at least one solvent selected from water, acetone, alcohols having 1 to 4 carbon atoms and/or dried to obtain a product. The alcohols having 1 to 4 carbon atoms may include, for example, methanol, ethanol, and/or propanol.

In the illustrated embodiment, the product of the solvothermal synthesis may be converted into porous amorphous cobalt oxide through heat treatment (first heat treatment). At this time, the heat treatment may be performed under an oxygen-containing atmosphere. In an embodiment, the heat treatment may be performed, for example, under an air atmosphere. In addition, the heat treatment (first heat treatment) is, for example, performed at a temperature which is adjusted within the range of about 300 to 500 °C. In an embodiment, the heat treatment may be performed at a temperature about 350 to 450 °C. In an embodiment, the heat treatment may be performed at a temperature about 380 to 420 °C. The heat treatment time is not particularly limited as long as all of the hydrothermal synthesis product is substantially converted into an oxide form, and is controlled, for example, within the range of at least about 2 hours. In an embodiment, this time may be about 2 to 6 hours. In an embodiment, this time may be about 3 to 5 hours.

The product formed through heat treatment may be an amorphous cobalt oxide represented by Formula $CoO_x$, in which x ranges from about 1 to 4. In an embodiment, x ranges from about 1.5 to 3.5. In an embodiment, x ranges from about 2 to 3. Such amorphous cobalt oxide contains large amounts of oxygen vacancies (defects) and thus improves OER performance because it can adsorb $OH^-$ ions, which are reaction intermediates of oxygen generation reaction (OER).

At this time, it should be noted that the cobalt oxide prepared in the above-described manner has a sheet-type nanostructure having developed pores, in particular, a remarkably improved porous structure, that is, a sponge structure, compared to normal cobalt oxide. In addition, the cobalt oxide particles constituting the sheet form may exhibit morphologies such as spherical, elliptical, and linear shapes.

The average pore size of porous cobalt oxide ($CoO_x$) can be measured by nitrogen adsorption ($N_2$ sorption), and be in a range of, for example, about 0.1 to 3 nm. In an embodiment the average pore size of porous cobalt oxide may range from 0.5 to 2 nm. In an embodiment, this size may range from about 1 to 1.5 nm.

According to an embodiment, the specific surface area (BET) of the cobalt oxide may range, for example, from about 40 to 90 $m^2/g$. In an embodiment, the specific surface area (BET) may range from about 50 to 80 $m^2/g$. In an embodiment, the specific surface area (BET) may range from about 60 to 70 $m^2/g$. In addition, the pore volume may be adjusted in the range of, for example, about 0.05 to 0.3 $cm^3/g$. In an embodiment, the pore size may range from 0.8 to 0.2 $cm^3/g$. In an embodiment, the pore size may range from about 0.1 to 0.15 $cm^3/g$. Due to the formation of porosity, reactive active sites may be increased, and efficient mass transfer of reactants/products may be induced.

According to one embodiment of the present disclosure, after the porous amorphous cobalt oxide is prepared, as a dopant, a P-block element, an element whose last electron occupies a p-orbital, may be incorporated to the porous amorphous cobalt oxide. In an embodiment, the P-block element may include an element belonging to Groups 13 to 18 on the Periodic Table. In an embodiment, the P-block element may include an element of Group 14 on the Periodic Table. In an embodiment, the P-block element may include a metal element of Group 14 on the Periodic Table. The P-block element suitable as a dopant in this embodiment may be, for example, an element having an electronegativity (Pauling scale) of about 1.6 to 2. In an embodiment, the P-block element may have an element having an electronegativity of about 1.7 to 1.9. In an embodiment, the P-block element may have an element having an electronegativity of about 1.9. For example, the P-block element may include at least one selected from lead (Pb), indium (In), antimony (Sb), tin (Sn), and the like.

In other embodiments, the P-block element may be lead (Pb), which can promote charge transfer in cobalt oxide due to excellent pseudocapacitive property and high electronegativity (approximately 1.9) thereof and can maximize catalyst performance due to the ability to easily control the electrical properties.

According to an embodiment, the dopant may be introduced in the form of a precursor, specifically added to

cobalt oxide in the form of a precursor solution. The medium or solvent used herein may be water, ethanol, methanol, propanol, or the like, and may be used alone or in combination. More specifically, the medium or solvent may be water (e.g., deionized water).

In a specific embodiment, when the dopant is lead (Pb), the lead precursor is not particularly limited as long as it has the property of being ionized in a medium or solvent, and includes at least one selected from, for example, lead nitrate ($Pb(NO_3)_2$), lead chloride ($PbCl_2$), lead sulfate ($PbSO_4$), lead acetylacetonate ($Pb(C_5H_7O_2)_2$), and the like. According to embodiments, the concentration of the dopant precursor solution may range, for example, from about 10 to 150 mM. In an embodiment, the concentration of the dopant precursor solution may range from about 20 to 100 mM. In an embodiment, the concentration of the dopant precursor solution may range from about 30 to 70 mM. When the concentration of the dopant precursor solution is too high or too low, unintended oxides of the dopant precursor may be formed or the doping effect may be insignificant. However, the concentration range described above may be provided for the illustrative purpose.

According to an embodiment, a dopant precursor solution may be added to the previously prepared porous amorphous cobalt oxide or brought into contact with the cobalt oxide.

In addition, the ratio of the dopant precursor to the cobalt oxide in the added solution may be determined depending on the composition of the final catalyst. In an embodiment, the molar ratio of cobalt oxide to dopant precursor is in the range of, for example, about 20:1 to 2:1. In an embodiment, the range may be about 15:1 to 4:1. In an embodiment, the range may be about 10:1 to 6:1. The above ranges are mere examples, and may vary depending on an embodiment. Also, the dopant precursor solution may be dropwise added to the cobalt oxide.

As described above, after the dopant precursor is added, washing may be performed, for example, at least once to remove dopant precursor remaining not mixed with the porous cobalt oxide, impurities, etc. Along with washing or alternatively, drying may be performed. In an embodiment, the drying may be performed at about 60 to 120 °C. In an embodiment, the drying may be performed at about 80 to 100 °C.

Next, the cobalt oxide, to which the dopant precursor is added, is subjected to heat-treatment (second heat treatment) to prepare an electrochemical catalyst. At this time, the heat treatment may be performed under an inert atmosphere, for example, at least one gas selected from argon, nitrogen, helium, and the like, and more specifically, under a nitrogen atmosphere. In addition, the heat treatment temperature (second heat treatment temperature) may be controlled in the range of, for example, about 300 to 500 °C. In an embodiment, the heat treatment temperature may be about 350 to 450 °C. In an embodiment, the heat treatment temperature may be about 380 to 420 °C. In addition, the heat treatment time is not particularly limited, but may be adjusted within the range of, for example, at least about 2 hours. In an embodiment, the time may be about 2 to 5 hours. In an embodiment, the time may be about 3 to 4 hours. Through heat treatment under such an inert atmosphere, the P-block element is doped into cobalt oxide and is converted to a partially oxidized form.

According to the present embodiment, in a cobalt oxide-based electrochemical catalyst, nano-scaled cobalt oxide particles form a porous sheet structure, wherein the size (or diameter) of the cobalt oxide particles measured by SEM may be in a range of, for example, from about 20 to 100 nm. In an embodiment, the size of the cobalt oxide particles may be from about 30 to 80 nm. In an embodiment, the size of the cobalt oxide particles may be from about 40 to 70 nm.

In addition, the width of the porous cobalt oxide sheet formed by combination or aggregation of cobalt oxide particles may be in a range of, for example, about 1 to 100 um. In an embodiment, the width may be about 5 to 80 um. In an embodiment, the width may be about 10 to 50 um.

In addition, the dopant, which is a P-block element, can be incorporated into cobalt oxide (i.e., a host component) to effectively control the electronic configuration of the cobalt oxide and improve charge transfer. In this case, the dopant may be incorporated in the form of a single atom.

According to an embodiment, the P-block element as a dopant in the porous amorphous cobalt oxide may be, for example, contained in an amount of about 0.5 to 3 at% based on the catalyst. In an embodiment, the amount may be about 0.6 to 2.5 at%. In an embodiment, the amount may be about 0.7 to 2 at%. According to a specific embodiment, the P-block element may be contained in an amount of, for example, about 0.8 to 1.5 at%. In an embodiment, the amount may be about 0.9 to 1.2 at%. When the dopant content is too low or too high, the doping effect may be insignificant or oxide formation may occur. Therefore, it may be advantageous to properly adjust the dopant content within the range defined above.

In addition, the cobalt oxide-based catalyst according to the present embodiment may have a slightly decreased specific surface area compared to the porous cobalt oxide before doping due to the incorporation or doping of the P-block element, but still maintain the high porosity of the cobalt oxide. In this embodiment, the catalyst based on doped cobalt oxide has a specific surface area range of, for example, from about 35 to 85 $m^2/g$. In an embodiment, the specific surface area may range from about 40 to 75 $m^2/g$. In an embodiment, the specific surface area may range from about 50 to 70 $m^2/g$. In this case, the reduction in the specific surface area (BET) compared to before doping may be, for example, about 8% or less. In an embodiment, the reduction may be about 6% or less. In an embodiment, the reduction may be about 4% or less.

As such, in the electrochemical catalyst according to the present embodiment, the increased specific surface area of cobalt oxide may enhance the catalytic active sites and effectively transfers reactants/products, and, at the same time, incorporation of the P-block element, especially lead (Pb), as a dopant, maximizes the catalytic performance. In addition, the electrochemical catalyst according to the present embodiment can exhibit an equal or higher electrochemical activity, particularly oxygen evolution reaction activity, compared to the conventional iridium oxide-based catalyst, which is advantageous in terms of economic feasibility and commercialization.

Although the present disclosure is not bound to a particular theory, excellent oxygen evolution reaction (OER) activity is obtained in spite of using a base metal due to the synergistic effects of the effective distribution of plenty of oxygen vacancies, which is attributable to the amorphous structure, on the catalyst surface, as well as the nanostructure effect and the control of electronic configuration.

## Electrode for oxygen evolution reaction (catalyst electrode) and water splitting system

According to another embodiment of the present disclosure, a porous amorphous cobalt oxide-based catalyst doped with a P-block element may be loaded on an electrochemical electrode that may be used to constitute a water splitting system. In particular, the electrode on which the catalyst is loaded may be applied as an anode where an oxygen evolution reaction occurs in the water splitting system.

According to an embodiment, the catalyst may be loaded on a conductive substrate in the manufacture of the electrode. As such, the loading is not limited to a particular method, and may be selected from methods known in the art, for example, slurry loading, deposition, spray coating, or the like.

In case of the slurry loading method, first, a slurry of the previously prepared catalyst (as a dispersion medium, for example, at least one selected from the group consisting of alcohol having 1 to 4 carbon atoms (e.g., methanol, ethanol, or propanol) and water (e.g., distilled water)) may be prepared. At this time, the concentration of the catalyst in the slurry may be adjusted within the range of, for example, about 5 to 30% by weight. In an embodiment, the concentration may range from about 10 to 20% by weight. Subsequently, a catalyst electrode may be prepared by applying the slurry to an electrode substrate (e.g., a conductive substrate) and then drying the slurry.

Alternatively, a deposition method may be used. In this case, the catalyst layer to be loaded may be controlled by adjusting the deposition rate, drying temperature, or the like and washing may be performed after deposition.

According to embodiments, the substrate on which the catalyst is loaded may have any of various shapes such as a plate, a rod, a mesh, a disk, or a wire. In addition, the conductive substrate may be made of a material capable of maintaining conductivity even when exposed to an oxidizing atmosphere. The conductive substrate may include, for example, at least one selected from a valve metal, such as titanium, aluminum, chromium, and the like, stainless steel, carbon, and the like, and an alloy thereof.

In an embodiment, the amount of catalyst that is loaded is, for example, within the range of about 0.02 to 0.2 $mg/cm^2$ based on the electrode. In an embodiment, the amount may range from about 0.04 to 0.15 $mg/cm^2$. In an embodiment, the amount may range from about 0.08 to 0.12 $mg/cm^2$. The ranges above are mere examples, and they may vary depending on an embodiment.

According to one embodiment of the present disclosure, a water splitting system in which water is dissociated or decomposed using the electrochemical electrode as described above as an anode to generate hydrogen at the cathode and oxygen at the anode may be implemented. The water splitting system basically includes a pair of opposite electrodes (i.e., an anode and a cathode), and each of the pair of electrodes is electrically connected to an external power source (e.g., a potentiostat, a battery, or the like). In case of a three-electrode system, it may further include a reference electrode. The reference electrode may be selected from the group consisting of Ag/AgCl, SCE (saturated calomel electrode), Hg/HgO, and $Hg/Hg_2SO_4$, and specifically, Ag/AgCl (3M NaCl).

According to an embodiment, in the water splitting system, among a pair of electrodes, an electrochemical electrode containing the aforementioned catalyst or being attached thereto is used as an anode, and the other electrode, the cathode, may be made of any type of material known in the art. In this regard, the cathode may also be made of a conductive material. For example, the conductive material applicable to the cathode may be selected from materials capable of exhibiting particularly low overpotential while easily generating hydrogen and not being decomposed even when contacting an aqueous electrolyte solution. For example, this material may include at least one selected from platinum, nickel, cobalt, iron, and the like (including alloys thereof). In the water splitting system according to a specific embodiment, each of the cathode and the anode may be operated in such a manner that is in contact with or immersed in an electrolyte-containing aqueous solution. For example, each of the pair of electrodes may be operated such that at least about 20% of the surface of the pair of electrodes is immersed in an electrolyte-containing aqueous solution (in an embodiment, at least about 50%; in an embodiment, at least 80%). In an embodiment, substantially the entire surface of the pair of electrodes is immersed in an electrolyte-containing aqueous solution.

Meanwhile, according to an embodiment, an aqueous medium (water) may be supplied to the water splitting system, but more specifically, an aqueous electrolyte solution (which may be acidic or alkaline) in which the electrolyte

is dissolved in the aqueous medium may be supplied thereto. In this case, the alkaline medium (or electrolyte) may contain at least one selected from potassium hydroxide, potassium hydrogen carbonate, potassium bicarbonate, sodium hydrogen carbonate, sodium hydroxide, lithium hydroxide, and the like. In an exemplary embodiment, the concentration of the alkaline medium may be, for example, within the range from about 0.05 to 3 M. In an embodiment, this range may be from about 0.08 to 2 M. In an embodiment, this range may be from about 0.1 to 1.5 M. In addition, the pH of the alkaline medium

(specifically, the electrolyte-containing aqueous solution)

may be adjusted within the basic range, for example, from about 9 to about 14 (in an embodiment, may be about 11 to about 14; in an embodiment, may be from about 12 to about 13) .

Meanwhile, according to an embodiment, the acidic medium (or electrolyte) may contain at least one selected from sulfuric acid, nitric acid, phosphoric acid, perchloric acid, hydrochloric acid, and the like. For example, the concentration of the acidic medium may be adjusted within the range of, for example, about 1 to 5 M. In an embodiment, this range may be about 1 to 4 M. In an embodiment, this range may be about 1 to 2 M. In addition, the pH of the acidic medium may be adjusted, for example, within the range of about 4 or less. In an embodiment, this range may be about 1 to 3. In an embodiment, this range may be about 1 to 2.

According to an embodiment, the water splitting system may perform a hydrogen and/or oxygen evolution reaction using a water electrolyzer based on an alkaline or acidic electrolyte-containing aqueous solution.

Alternatively, a water splitting system may be configured using a polymer electrolyte membrane or the like as a separator. This separator is typically disposed between the cathode and the anode and functions to form a barrier to prevent reformation of water due to mixing of oxygen generated at the anode with hydrogen generated at the cathode. In this regard, the examples of separator materials include porous ceramic membranes (e.g., zirconia-based membranes), porous polymeric membranes (e.g., polyolefin-based, more specifically polypropylene-based membranes), solid polymer electrolyte membranes (such as an ion exchange membrane made of a perfluorosulfonic acid polymer under the trade name Nafion), and the like.

In general, the thermodynamic decomposition voltage for the water splitting is 1.23 V at 25 °C and atmospheric pressure. However, the reaction rate is reduced and water splitting hardly occurs due to various resistance factors in the actual water splitting system. Therefore, typically, the water splitting does not occur until an overpotential is applied. That is, when the absolute values of the oxidation current generated at the anode and the reduction current at the cathode are identical to each other, that is, when the amounts of electrons flowing from the anode and the cathode are identical, a circuit can be formed and thus water splitting is possible. The potential for current of the identical intensity to flow in the pair of opposite electrodes is different at respective electrodes and the voltage at this time corresponds to the overpotential at each electrode.

The water splitting system including the electrochemical electrode using the composite catalyst according to the present embodiment is capable of performing the water splitting reaction at a low overpotential. For example, when oxygen (or oxygen gas) is generated from an anode by water splitting, operation is possible at a low overpotential. In addition, water splitting may be performed at, for example, about 15 to 40 °C (in an embodiment, at about 20 to 30 °C; in an embodiment, at room temperature).

According to the present disclosure, when an electrochemical electrode, on which a porous amorphous cobalt oxide-based catalyst doped with a P-block element is loaded, is used as an anode, the OER performance may be, for example, about 0.4 V or less. In an embodiment, this range may be about 0.38 V or less. In an embodiment, this range may be about 0.36 V or less. In an embodiment, this range may be about 0.34 V or less at a reference current density of 10 $mA/cm^2$, a scan rate of 10 $mV\ s^{-1}$ in the presence of a 0.1 M KOH solution (pH 13). The Tafel slope may be, for example, about 100 mV/dec or less. In an embodiment, this range may be about 80 mV/dec or less. In an embodiment, this range may be about 70 mV/dec or less.

Meanwhile, when the electrochemical electrode according to the present disclosure is applied to the water splitting system, oxygen and hydrogen may be recovered from the anode and the cathode, respectively. In particular, the purity of the oxygen generated at the anode is, for example, at least about 98% (in an embodiment, at least about 99%; in an embodiment, at least about 99.9%), substantially 100%. In addition, the purity of the hydrogen generated at the cathode may be, for example, at least about 98% (in an embodiment, least about 99%; in an embodiment, at least about 99.9%).

Hereinafter, embodiments according to the present disclosure will be provided for better understanding of the present disclosure. However, the following examples are provided only for illustration of the present disclosure and thus should not be construed as limiting the scope of the present disclosure.

**Example**

The details of the materials used in this Example, catalyst analysis and electrochemical performance test are as follows.

A. Materials

- Cobalt (II) nitrate hexahydrate ($Co(NO_3)_2 \cdot 6H_2O$, 98.5%), lead nitrate hydrate ($Pb(NO_3)_2.xH_2O$, 99.9%), triethylene glycol, glycerol and potassium hydroxide (KOH, 1.0 M) were each purchased from Sigma-Aldrich.
- All of the purchased materials were used without any additional purification process. In addition, deionized water was used as the water used in the example.

B. Catalytic analysis

The metal crystal surface was observed using X-ray diffraction (XRD; PANalytical). At this time, measurement was performed at 40 kV and 100 mA using a Cu K$\alpha$ line in the range of 10 to 80° at a scan rate of 6°/min at an interval of 0.01°.

- The oxidation number change of the transition metal was analyzed using an X-ray photoelectron spectrometer (XPS; ESCALAB 250Xi). All XPS results were calibrated based on 284.6 eV, the 1s binding energy of carbon.
- The surface structure of the catalyst was analyzed using a scanning electron microscope (SEM; SU8230) and an EDS detector attached to the scanning electron microscope was used for elemental mapping.

C. Test for evaluation of electrochemical performance (OER)

Each of a lead-doped $CoO_x$ porous sheet (Pb-$CoO_x$-PS) catalyst, a $CoO_x$ porous sheet (CoOx-PS) catalyst, a non-porous CoOx (CoOx) catalyst, and a commercially available catalyst $IrO_2$ was deposited on a glassy carbon electrode, which is a rotating disk electrode (RDE), using a micropipette and a working electrode was set (loading amount: 0.1 $mg/cm^2$).

The polarization of the OER was measured under conditions of a 0.1 M KOH solution (pH 13) and a scan rate of 10 mV/s at room temperature. Meanwhile, Hg/HgO (sat. 1 M NaOH) and Pt wire were used as a reference electrode and a counter electrode, respectively.

In addition, the potential measured during the electrochemical test was converted from Hg/HgO to a reversible hydrogen electrode (RHE) in accordance with Equation 1 below and all measured values were expressed as "vs RHE (reversible hydrogen electrode)".

[Equation 1]

$$E(RHE) = E(Hg/HgO) + 0.8676$$

In addition, linear sweep voltammetry (LSV) was measured to determine water splitting efficiency and the Tafel slope was calculated based thereon.

Example 1

Preparation of lead-doped $CoO_x$ porous sheet (Pb-$CoO_x$-PS) catalyst

5 mmol of cobalt nitrate hexahydrate was added to a mixed solvent of 48 mL of triethylene glycol and 2 mL of glycerol, and sonicated and stirred until the cobalt precursor was completely dissolved. Then, the sample was allowed to react at 170 °C for 3 hours by hydrothermal synthesis, washed with acetone and distilled water, and subsequently heat-treated at 400 °C under an air atmosphere to prepare cobalt oxide.

A 0.05 mmol/mL Pb precursor solution was added dropwise to the prepared cobalt oxide with a pipette, dried at 80 °C, and then heat treated at 400 °C under a nitrogen atmosphere to obtain a Pb-$CoO_x$-PS catalyst. At this time, the amount of Pb doping in the catalyst was 1.0 at%.

Comparative Example 1

Preparation of CoOx porous sheet (CoOx-PS) catalyst

An undoped CoOx-PS catalyst was prepared in the same manner as in Example 1, except that a lead (Pb) solution was not added during the catalyst preparation process.

Comparative Example 2

Preparation of non-porous $CoO_x$ (CoOx) catalyst

A $CoO_x$ catalyst was prepared by solvothermal synthesis of cobalt precursor and heat treatment in the same manner as in Example 1, except that 50 mL of ethylene glycol (Sigma-Aldrich) was used instead of the combination of triethylene glycol and glycerol, and the reaction was performed at 200 °C for 3 hours.

Comparative Example 3

$IrO_2$ black (weight 100%, Alfa Aesar), a commercially available anode catalyst, was used.

Results and discussion

A. Characterization

- SEM analysis

The results of SEM and energy dispersive X-ray spectroscopy (EDX)-mapping analysis of the lead-doped $CoO_x$ porous sheet catalyst (Pb-CoOx-PS) and non-porous $CoO_x$ (CoOx) catalyst are shown in FIGS. 2A and 2B, respectively.
As can be seen from FIGS. 2A and 2B, in the Pb-CoOx-PS catalyst, the cobalt oxide particles having an average size of 50 nm constitute a porous sheet structure. On the other hand, the CoOx catalyst prepared using ethylene glycol during the solvothermal synthesis had a non-porous structure with no structural specificity.

- XRD analysis

The XRD patterns of the lead-doped CoOx porous sheet (Pb-CoOx-PS) catalyst, the CoOx porous sheet (CoOx-PS) catalyst and the non-porous CoOx (CoOx) catalyst are shown in FIG. 3.
As can be seen from FIG. 3, no crystal peaks were observed in all three samples analyzed, which indicates that the samples had an amorphous appearance.

- Specific surface area (BET) analysis

The results of adsorption experiments for analysis of the specific surface area (BET) of each of the lead-doped $CoO_x$ porous sheet (Pb-$CoO_x$-PS) catalyst, the CoOx porous sheet ($CoO_x$-PS) catalyst, and the non-porous $CoO_x$ ($CoO_x$) catalyst are shown in Table 1 below and FIG. 4.

[Table 1]

| Item | CoOx | CoOx-PS | Pb-CoOx-PS |
|---|---|---|---|
| BET specific surface area ($m^2/g$) | 31.5 | 65.4 | 63.1 |

As can be seen from Table 1 and FIG. 4, the CoOx-PS catalyst and the Pb-CoOx-PS catalyst having a porous sheet structure approximately doubled the BET specific surface area compared to the non-porous CoOx catalyst.

- XPS analysis

The results of XPS analysis of each of the lead-doped $CoO_x$ porous sheet (Pb-CoOx-PS) catalyst, the $CoO_x$ porous sheet ($CoO_x$-PS) catalyst, and the non-porous CoOx ($CoO_x$) catalyst are shown in FIG. 5.
As can be seen from FIG. 5, the result of XPS analysis showed that CoOx, which is dominant in CoO structure,

was synthesized and that Pb-CoOx-PS was successfully doped with Pb atoms. In particular, doping with Pb, a P-block element, caused a peak shift in the Co 2p main peak, which indicates that the electronic structure was changed.

B. Electrochemical performance analysis

The results of overpotential measurement and current density vs voltage curves for the commercial iridium oxide ($IrO_2$) catalyst, lead-doped CoOx porous sheet (Pb-CoOx-PS) catalyst, the CoOx porous sheet (CoOx-PS) catalyst, and the non-porous CoOx (CoOx) catalyst are shown in Table 2 below and FIG. 6.

[Table 2]

| Catalyst | Overpotential[1] (V vs RHE) (current density reference: 10 mA/cm$^2$) |
|---|---|
| $IrO_2$ | 0.31 |
| Pb-CoOx-PS | 0.34 |
| CoOx-PS | 0.38 |
| CoOx | 0.46 |
| [1]: iR-corrected data | |

As can be seen from Table 2 and FIG. 6, the oxygen evolution reaction performance was evaluated in the order of $IrO_2$ ≥ Pb-$CoO_x$-PS > $CoO_x$-PS > $CoO_x$. Specifically, the Pb-$CoO_x$-PS catalyst required an overvoltage of 0.34 V to obtain a current density corresponding to 10 mA/cm$^2$, which is about 40 mV and about 120 mV lower than the CoOx-PS catalyst and the CoOx catalyst, respectively. In particular, it can be seen that the performance of the Pb-CoOx-PS catalyst is comparable to $IrO_2$, a noble metal, even though a small amount of the catalyst is loaded.

The OER rate (kinetics) can be evaluated by measuring the Tafel plot from the applied voltage vs. log current density curve of each of the commercial iridium oxide ($IrO_2$) catalyst, the lead-doped $CoO_x$ porous sheet (Pb-$CoO_x$-PS) catalyst, the $CoO_x$ porous sheet ($CoO_x$-PS) catalyst, and the non-porous $CoO_x$ catalyst. The results are shown in FIG. 7.

As can be seen from FIG. 7, the slope of the Pb-CoOx-PS catalyst (69.5 mV/dec) was similar to that of $IrO_2$ (70.0 mV/dec) and was lower than the slopes of CoOx-PS (85.5 mV/dec) and CoOx (108.4 mV/dec). These results support that the Pb-CoOx-PS catalyst promotes the oxygen evolution reaction through a more efficient catalytic reaction pathway.

Further, it is supposed that the above results are attributable to the maximization of the active sites, which stems from the porous amorphous sheet structure with a large specific surface area, and the effective transportation of reactants/products. Moreover, the Pb-CoOx-PS catalyst exhibits improved electrochemical activity, that is, oxygen evolution reaction performance due to suitable adjustment of the electronic structure by doping with lead (Pb).

As described above, the porous amorphous cobalt oxide-based catalyst according to a specific embodiment of the present disclosure can improve the inefficient oxygen evolution reaction activity, which has been regarded as a barrier in the conventional water splitting system, to a level comparable to an expensive noble metal-based catalyst, in spite of using a base-metal catalyst, thus providing economic feasibility. As such, the catalyst thus prepared is used as an electrode for oxygen evolution reaction, is thus suitable for commercialization of the entire water splitting system and can create high added value. Therefore, the catalyst is expected to be widely applied in the future.

It should be understood that modifications and variations of the present disclosure may be made by those skilled in the art, and such modifications or variations should fall within the scope of the present disclosure.

## Claims

1. A catalyst for an oxygen evolution reaction electrode for water splitting, comprising:

    porous amorphous cobalt oxide; and
    0.5 to 3 at% of at least one P-block element as a dopant, based upon the catalyst.

2. The catalyst according to claim 1, wherein the catalyst has a specific surface area (BET) of 35 to 85 m$^2$/g.

3. The catalyst according to claim 1 or 2, wherein the at least one P-block element is lead (Pb).

**4.** The catalyst according to any of claims 1 to 3, wherein the porous amorphous cobalt oxide in the catalyst is represented by CoOx,
wherein x is 1 to 4.

**5.** A method of preparing a catalyst for an oxygen evolution reaction electrode for water splitting, which comprises:

a) converting a cobalt precursor into cobalt hydroxide by solvothermal synthesis,
b) heat-treating the solvothermal synthesis product in an oxygen-containing atmosphere at a first heat treatment temperature to form porous amorphous cobalt oxide, and
c) adding a precursor of at least one P-block element to the porous amorphous cobalt oxide, followed by performing heat treatment under an inert atmosphere at a second heat treatment temperature,

wherein the porous amorphous cobalt oxide is doped with the at least one P-block element in an amount of 0.5 to 3 at%, based upon the catalyst.

**6.** The method according to claim 5, wherein a solvent for the solvothermal synthesis is a mixed solvent containing polyglycol and polyol.

**7.** The method according to claim 6, wherein a volume ratio of the polyglycol to the polyol in the solvent is adjusted within the range of 10:1 to 50:1.

**8.** The method according to claim 6, wherein the polyglycol is at least one selected from the group consisting of triethylene glycol, diethylene glycol, dipropylene glycol and tetraethylene glycol, and
the polyol is at least one selected from the group consisting of glycerol, trimethylolpropane, glycerol propoxylate, glycerol ethoxylate and glycerol trihexanoate.

**9.** The method according to any of claims 5 to 8, wherein the operation a) is performed at a temperature controlled within a range of 150 to 250 °C, and
the first heat treatment temperature and the second heat treatment temperature are each controlled in a range of 300 to 500 °C.

**10.** The method according to any of claims 5 to 9, wherein the inert atmosphere is formed by at least one gas selected from the group consisting of argon, nitrogen and helium.

**11.** An oxygen evolution reaction electrode for water splitting comprising:

an electrode substrate; and
a porous amorphous metal oxide-based catalyst loaded on the electrode substrate;
wherein the porous amorphous metal oxide-based catalyst comprises:

porous amorphous cobalt oxide; and
0.5 to 3 at% of at least one P-block element as a dopant, based upon the catalyst.

**12.** The oxygen evolution reaction electrode according to claim 11, wherein an amount of the catalyst loaded in the electrode is within a range of 0.02 to 0.2 $mg/cm^2$.

**13.** A water splitting system comprising:

an anode and a cathode as electrochemical electrodes electrically connected to an external power source; and
an aqueous medium containing an electrolyte, wherein, upon application of a voltage from the external power source, oxygen is generated at the anode and hydrogen is generated at the cathode,
wherein the anode comprises a porous amorphous cobalt oxide-based catalyst loaded on an electrode substrate, and
the porous amorphous cobalt oxide-based catalyst comprises:

(i) porous amorphous cobalt oxide; and
(ii) 0.5 to 3 at% of at least one P-block element as a dopant, based upon the catalyst.

**14.** The water splitting system according to claim 13, wherein the aqueous medium containing the electrolyte is an alkaline medium or an acidic medium.

**15.** A water splitting system comprising:

an anode including an electrode substrate;
a cathode including a conductive material;
an aqueous solution containing an electrolyte; and
a power source,
wherein a porous amorphous cobalt oxide-based catalyst is loaded on the electrode substrate, and
wherein the porous amorphous cobalt oxide-based catalyst comprises:

porous amorphous cobalt oxide; and
at least one P-block element having an atomic percentage from 0.5 to 3% in the porous amorphous cobalt oxide-based catalyst.

Fig. 1

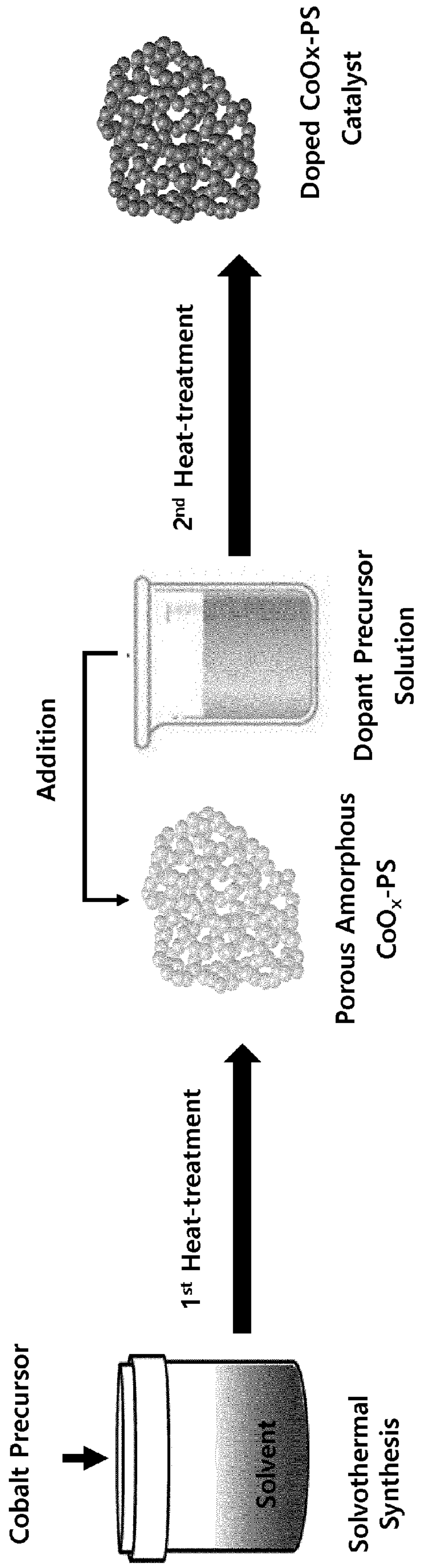
Cobalt Precursor
Solvent
Solvothermal Synthesis
1st Heat-treatment
Porous Amorphous $CoO_x$-PS
Addition
Dopant Precursor Solution
2nd Heat-treatment
Doped CoOx-PS Catalyst

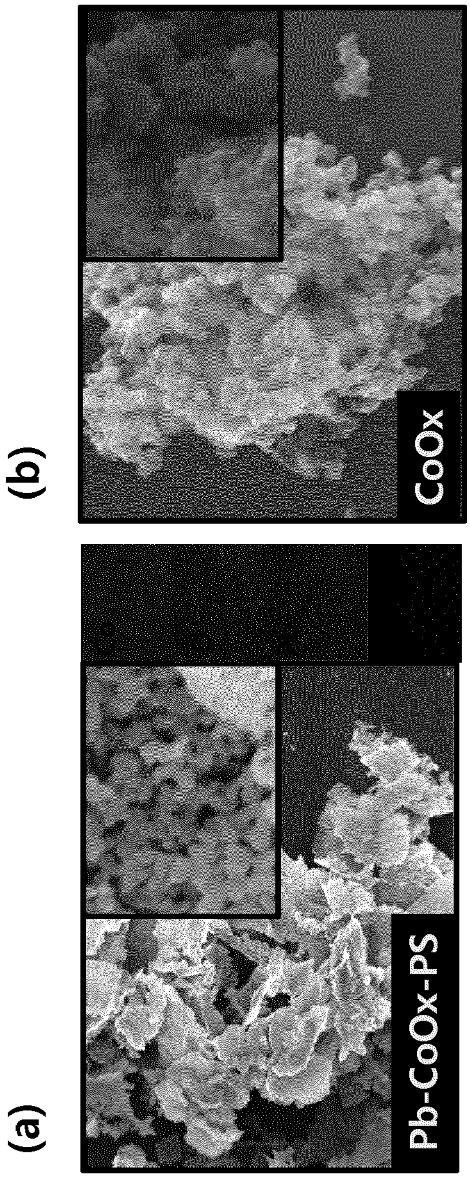


Fig. 2

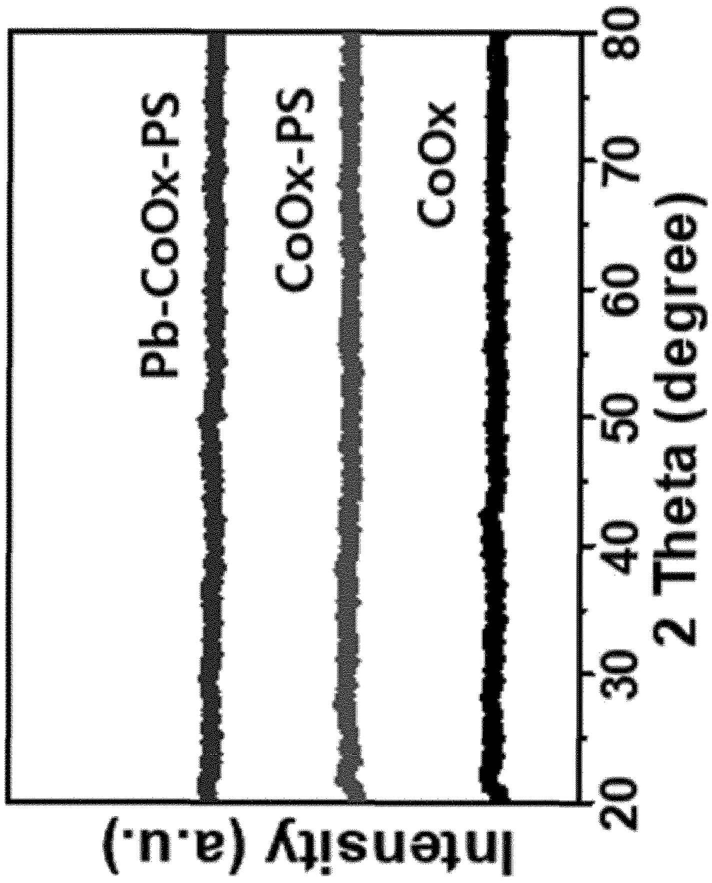
Pb-CoOx-PS
CoOx-PS
CoOx
Intensity (a.u.)
2 Theta (degree)
20
30
40
50
60
70
80

Fig. 3

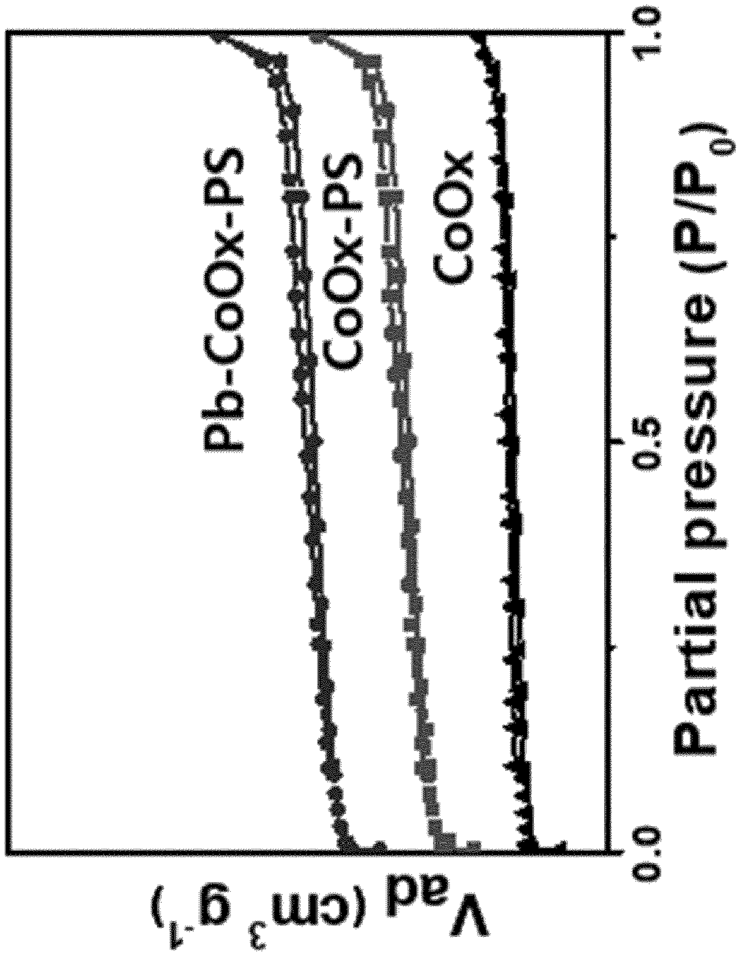
Pb-CoOx-PS
CoOx-PS
CoOx
Partial pressure (P/P0)
0.0
0.5
1.0
Vad (cm3 g-1)

Fig. 4

Fig. 5

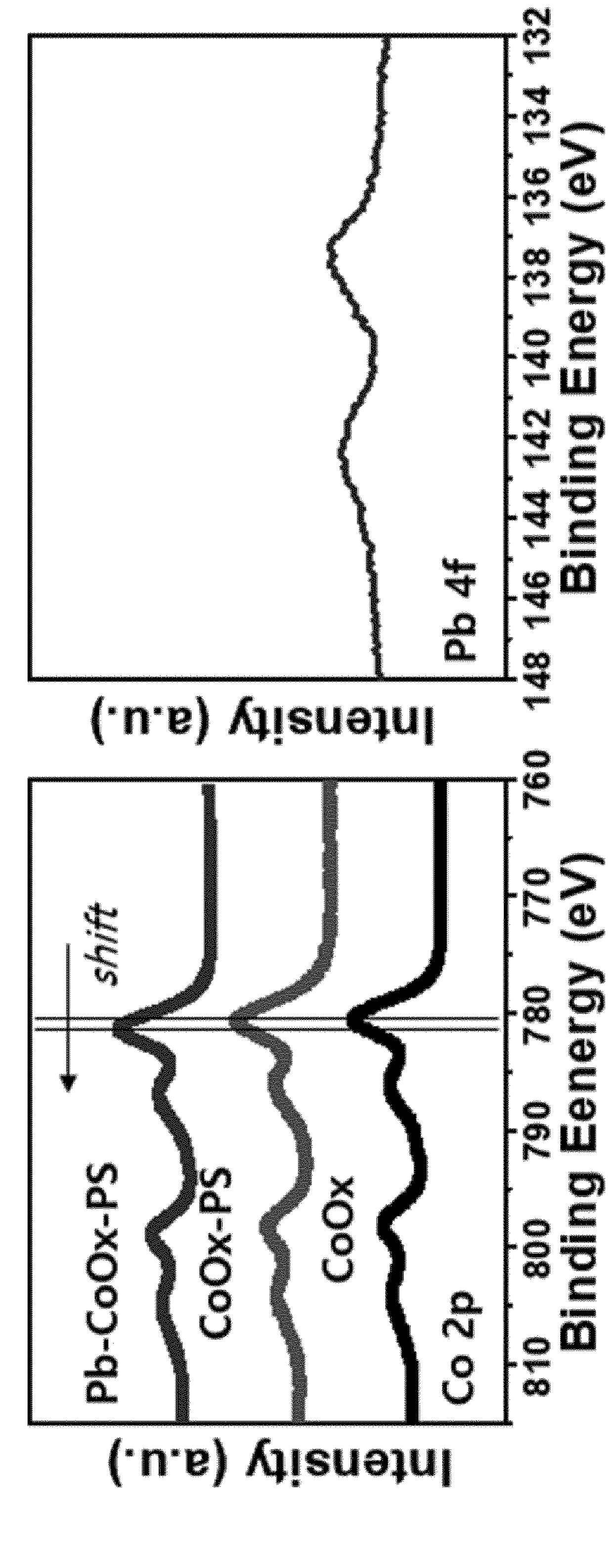
Intensity (a.u.)
Pb-CoOx-PS
CoOx-PS
CoOx
Co 2p
shift
810
800
790
780
770
760
Binding Eenergy (eV)
Intensity (a.u.)
Pb 4f
148
146
144
142
140
138
136
134
132
Binding Energy (eV)

Fig. 6

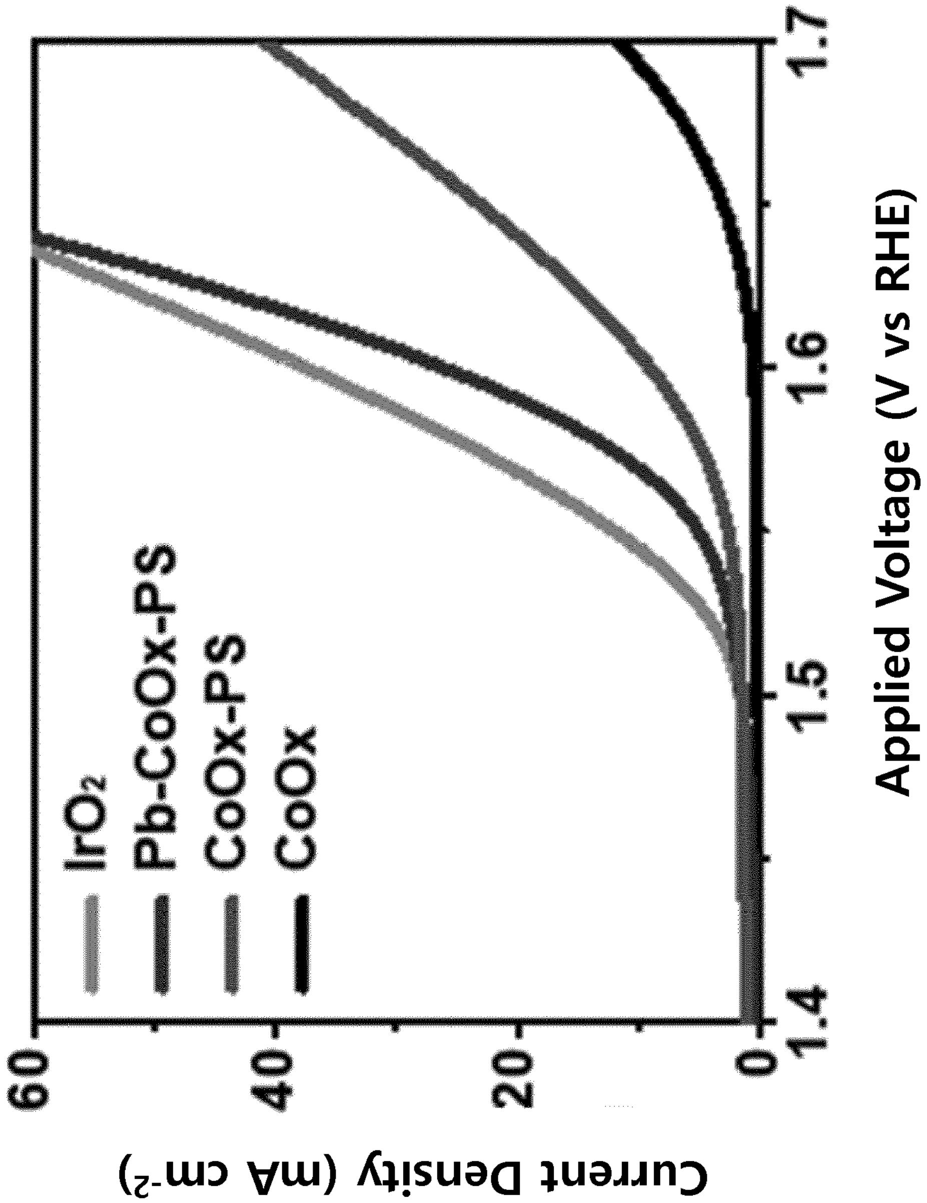
IrO₂
Pb-CoOx-PS
CoOx-PS
CoOx
Applied Voltage (V vs RHE)
Current Density (mA cm-2)
1.4
1.5
1.6
1.7
0
20
40
60

Fig. 7

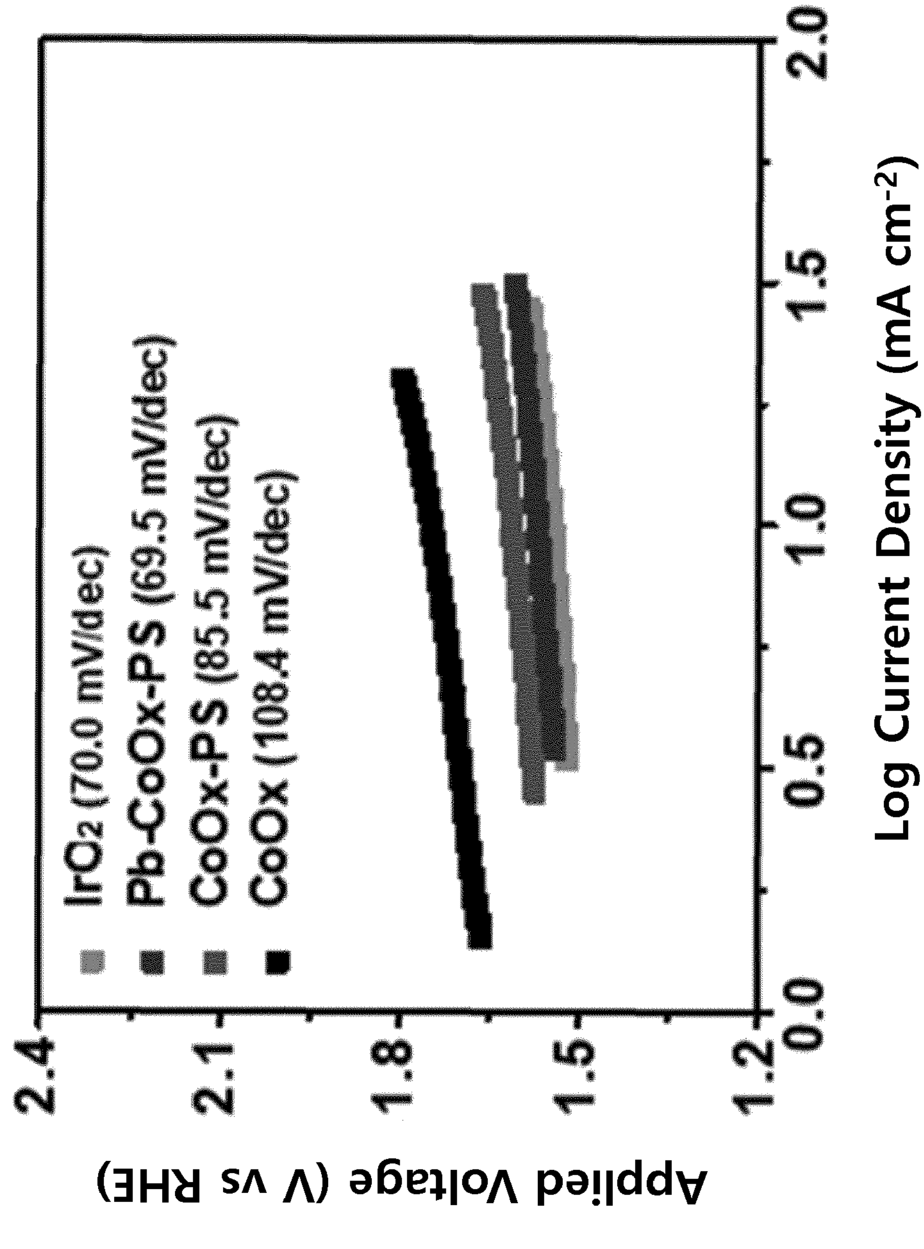
IrO2 (70.0 mV/dec)
Pb-CoOx-PS (69.5 mV/dec)
CoOx-PS (85.5 mV/dec)
CoOx (108.4 mV/dec)
Applied Voltage (V vs RHE)
2.4
2.1
1.8
1.5
1.2
0.0
0.5
1.0
1.5
2.0
Log Current Density (mA cm-2)